# EUROPÄISCHE PATENTSCHRIFT

(11) **EP 2 740 966 B1**
(45) Veröffentlichungstag und Bekanntmachung des Hinweises auf die Patenterteilung: **05.02.2020**
(21) Anmeldenummer: 12195649.4
(22) Anmeldetag: 05.12.2012
(51) Int. Cl.: F16F 15/32, H02K 7/04, H02K 15/16

(54) **Verfahren zur Wuchtung eines Bauteils**
Method for balancing a component
Procédé destiné à l'équilibrage d'un composant

(43) Veröffentlichungstag der Anmeldung: 11.06.2014
(73) Patentinhaber: Siemens Aktiengesellschaft, 80333 München (DE)
(72) Erfinder: Friedrich, Jens, 97616 Bad Neustadt (DE); Kuhn, Martin, 97714 Oerlenbach (DE)

(56) Entgegenhaltungen:
- EP-A2- 0 622 885
- WO-A2-2014/060339
- DE-A1- 10 352 775
- DE-A1-102009 047 619
- US-A1- 2010 117 471
- US-B1- 6 597 719

## Beschreibung

Die Erfindung betrifft ein Verfahren zur Wuchtung eines Bauteils, insbesondere eines Rotors einer elektrischen Maschine. Die Erfindung betrifft weiter ein Bauteil einer elektrischen Maschine, welches durch ein solches Verfahren gewuchtet wurde, sowie eine elektrischen Maschine, die ein solches Bauteil aufweist. Die Erfindung betrifft weiter eine Vorrichtung, mit welcher ein Bauteil mittels des erfindungsgemäßen Verfahrens gewuchtet wird.

Bauteile, die während ihres Einsatzes rotieren, bedürfen in der Regel einer Wuchtung. Bei einer Wuchtung findet, axial und radial zur Rotationsachse, ein Massenausgleich statt, so dass die Rotationsachse des Bauteils mit einer der Hauptträgheitsachse des Bauteils übereinstimmt. Stimmen die Rotationsachse und eine der Hauptträgheitsachsen nicht überein, entstehen bei einer Rotation des Bauteils Deviationsmomente, welche insbesondere die Aufhängung des rotierenden Bauteils belasten. Dieses Verhalten wird oft als die Wirkung einer Unwucht des Bauteils bezeichnet. Deviationsmomente bewirken ein periodisch wiederkehrendes Drehmoment orthogonal zur Rotationsachse des Bauteils. Diese Drehmomente können bei hohen Rotationsenergien zu einer erheblichen Belastung der Aufhängung des Bauteils führen. Diese Belastung kann zu einer Zerstörung der gesamten elektrischen Maschine führen. Daher werden Bauteile, die für einen rotierenden Einsatz vorgesehen sind, gewuchtet.

Um Deviationsmomente auszugleichen, werden rotierende Bauteile entweder durch das Anbringen von definierten Massen an bestimmten Positionen gewuchtet oder zylindergeformte Stifte in vorgefertigte Löcher eingeführt. Diese zylindergeformten Stifte erlauben nur eine grobe Wuchtung. Eine genauere Wuchtung ist beispielsweise bei der Verwendung von Wuchtkitt möglich, wobei der Wuchtkitt auf die entsprechenden Punkte des zu wuchtenden Bauteils aufgebracht wird. Wuchtkitt ist sehr genau portionierbar und kann an fast jeder Position des Bauteils aufgebracht werden. Daher kann eine hohe Güte der Wuchtung mittels Wuchtkitt erreicht werden. Jedoch erfordert dieses Verfahren erhöhte Ansprüche an diejenige Person, welche die Wuchtung durchführt. Zudem wird nicht immer die gleiche Güte der Wuchtung erreicht.

WO 2014/060339A2 offenbart eine Rotoranordnung für eine elektrische Maschine sowie ein Verfahren zur Herstellung einer Rotoranordnung.

Der Erfindung liegt die Aufgabe zugrunde, die Wuchtung von Bauteilen zu verbessern.

Diese Aufgabe wird bei einem Verfahren der eingangs genannten Art dadurch gelöst, dass das Bauteil dadurch ausgewuchtet wird, dass Stifte mit einer unterschiedlichen Größe ihrer Querschnittsfläche in entsprechende Öffnungen im Bauteil fixiert werden.

Die Aufgabe wird weiter durch ein Bauteil einer elektrischen Maschine gemäß Anspruch 8, sowie durch eine elektrische Maschine mit einem derartigen Bauteil gelöst.

Diese Aufgabe wird weiter durch eine Vorrichtung zum Wuchten eines Bauteils, insbesondere eines Rotors einer elektrischen Maschine, gelöst. Dabei fixiert die Vorrichtung nach Feststellung einer Unwucht Stifte unterschiedlich großer Querschnittsfläche in den dafür vorgesehenen Öffnungen. Dieser Vorgang wird bei nicht ausreichender Güte der Wuchtung wiederholt.

Der Erfindung liegt die Erfahrung zugrunde, dass bei Verwendung von vorgefertigten Stiften einer festen Größe der Querschnittsfläche eine nicht ausreichende Güte der Wuchtung erfolgen kann. Eine hohe Güte ist insbesondere für Elektromotoren in elektrisch betriebenen Automobilen von hoher Bedeutung. Durch die Kombination von Stiften einer großen Querschnittsfläche sowie Stiften einer kleinen Querschnittsfläche, die nebeneinander in dafür vorgesehene Öffnungen fixiert werden, kann die Güte der Wuchtung erhöht werden. Als Querschnittsfläche ist die Fläche gemeint, welche nach der Fixierung der Stifte parallel zur Oberfläche des Bauteils liegt. Der Rand der Querschnittsfläche kann sowohl Rundungen als auch eckige Bereiche aufweisen. Als besonders vorteilhaft haben sich jedoch zylindergeformte Stifte herausgestellt. Zur Fixierung der Stifte kann eine kraftschlüssige Verbindung durch einen Einpressvorgang, eine Verbindung durch Verklebung sowie eine Schraubverbindung dienen. Eine Schraubverbindung ist insbesondere bei zylindergeformten Stiften zu wählen und kann mit einer Klebeverbindung kombiniert werden. Am besten geeignet hat sich für dieses Verfahren eine Fixierung der Stifte mittels einer Klebeverbindung in der entsprechenden Öffnung herausgestellt. Ein Vorteil dieses Verfahrens besteht neben der erreichbaren hohen Güte der Wuchtung in der Möglichkeit, das Verfahren zu automatisieren. Falls sich die Güte der Wuchtung nach der einmaligen Durchführung des Verfahrens als unzureichend herausstellt, kann der Vorgang wiederholt werden und zusätzliche Stifte einer kleinen Querschnittsfläche in die noch freien Öffnungen fixiert werden. Dies wird nachfolgend als mehrstufiges Verfahren bezeichnet. Auch das mehrstufige Verfahren lässt sich automatisieren. Die erreichbare hohe Güte der Wuchtung führt zu einer erheblich längeren Lebensdauer bei geringeren Produktionskosten im Vergleich zu einer manuellen Wuchtung.

Bei einer vorteilhaften Ausgestaltung dieses Verfahrens werden die Öffnungen dergestalt angeordnet, so dass in unmittelbarer Nähe der Öffnungen einer ersten Querschnittsfläche jeweils mindestens eine weitere Öffnung mit einer zweiten Querschnittsfläche angeordnet, wobei die erste Querschnittsfläche gegenüber der ersten Querschnittsfläche verkleinert ist. Durch diese Kombination von Öffnungen, die für die entsprechenden Stifte vorgesehen sind, lässt sich bei einem geringen Platzbedarf eine hohe Güte der Wuchtung erreichen. Die Wuchtung mittels Stifte einer kleinen Querschnittsfläche ist genauer als mit Stiften einer großen Querschnittsfläche da die Genauigkeit der Eindringtiefe nach der Fixierung der Stifte begrenzt ist. Die Lokalisierung der Öffnungen mit großen und kleinen Querschnittsflächen führt zu einer höheren Stabilität des Bauteils im Vergleich zu einer homogeneren Verteilung der Öffnungen über die Oberfläche des Bauteils.

Bei einer weiteren vorteilhaften Ausgestaltungsform werden um die kreisförmige Öffnung der ersten Querschnittsfläche jeweils drei weitere, kreisförmige Öffnungen mit einer zweiten Querschnittsfläche dergestalt angeordnet. Dabei befinden sich die Ränder der weiteren Öffnungen in unmittelbarer Nähe des Randes derjenigen Öffnung, die die erste Querschnittsfläche aufweist. Die Verbindungslinien zwischen dem Mittelpunkt der kreisförmigen Öffnung der großen Querschnittsfläche und der Mittelpunkte der weiteren kreisförmigen Öffnungen schließen vorteilhaft einen Winkel von etwa 120 Grad ein. Diese Anordnung erlaubt die Wuchtung einer erhöhten Güte, da die Stifte einer kleinen Querschnittsfläche denjenigen Stift mit der großen Querschnittsfläche ergänzen. Diese Anordnung besitzt zudem den Vorteil einer geringen Größe der Öffnung oder des Bereiches, der die Öffnungen für alle Stifte umfasst. Diese kompakte Anordnung vermindert die Stabilität des Bauteils nur unwesentlich. Dies ist insbesondere für einen Rotor einer elektrischen Maschine von entscheidender Bedeutung, da in diesem Fall die Öffnungen zwischen den Aussparungen für die Wicklungen oder die Permanentmagnete angeordnet werden können.

Bei einer weiteren vorteilhaften Ausgestaltungsform weisen die Stifte unterschiedlicher Größe, unterschiedlicher Querschnittsformen und unterschiedlicher Querschnittsflächen auf und/oder sind jeweils aus Werkstoffen unterschiedlicher Dichte, insbesondere aus Aluminium, Stahl, Zink, Wolfram, Blei, Harz oder Kunststoff gefertigt. Die verschiedenen Werkstoffe zeichnen sich bei gleicher Größe durch unterschiedliche Gewichte und Festigkeiten aus. Bei einer Verwendung von Stiften aus Stahl kann eine kraftschlüssige Verbindung hoher Festigkeit zwischen dem Stift und dem Bauteil entstehen. Dies gilt insbesondere, falls durch eine unmittelbar zusammenhängende Anordnung von Öffnungen diese Öffnungen zusammenfallen und eine zusammengesetzte Öffnung mit teilweise konkavem und teilweise konvexem Rand entsteht. Die Verwendung von weichen Werkstoffen wie Aluminium, Kupfer, Kunststoffen oder Blei ergibt einen guten Formschluss zwischen dem Stift und der entsprechenden Öffnung. Zusätzlich können mittels weichen Werkstoffen Unebenheiten der Innenflächen derjenigen Öffnungen, welche herstellungsbedingt eine geringe Oberflächengüte aufweisen, durch den Formschluss ausgeglichen werden und gegebenenfalls entstehende undichte Stellen vermieden werden. Bei der Verwendung von Kunststoffen oder eines Harzes besteht die Möglichkeit, dass diese Werkstoffe in flüssiger Form in die entsprechende Öffnung eingebracht wird und diese anschließend aushärten und so eine feste Verbindung mit dem Bauteil eingehen.

Bei einer weiteren vorteilhaften Ausgestaltungsform setzen sich die Stifte aus mehreren Elementen derselben Querschnittsfläche zusammen, welche in der entsprechenden Öffnung fixiert werden. Eine Zusammensetzung von Stiften aus mehreren Elementen erhöht die zu erreichende Genauigkeit, insbesondere weil mehrere Elemente unterschiedlicher Höhe und Dichte kombiniert werden können. So ist es möglich, die Stifte der vorliegenden Unwucht anzupassen. Gleichzeitig kann bei der Wuchtung die Anzahl der Öffnungen, in denen die Stifte fixiert werden, reduziert werden, da eine genauere Anpassung an die geforderte Massenverteilung oft schon mit einem oder zwei, aus verschiedenen Elementen zusammengesetzten Stift erreicht werden kann. Durch diese Ausgestaltung des Verfahrens können, einem Baukastenprinzip analog, eine Vielzahl in ihren Eigenschaften unterschiedliche Stifte aus wenigen verschiedenen Elementen aufgebaut werden. Zudem kann eine noch genauere Wuchtung erreicht werden, da den Anforderungen genauer entsprechende Stifte zusammengesetzt werden können als wenn nur ein Stift einer feststehenden Länge und Material eingesetzt wird. Insbesondere für die Stifte eines geringen Durchmessers erhöht eine angepasste Zusammensetzung der Stifte die Güte der Wuchtung.

Bei einer weiteren vorteilhaften Ausgestaltungsform werden die Stifte nach einer Feststellung der Unwucht automatisiert in die dafür vorgesehenen Öffnungen eingeführt. Bei einer nicht ausreichenden Wuchtungsgüte wird der Wuchtungsvorgang wiederholt. Die Automatisierung der Wuchtung stellt einen erheblichen Fortschritt bei Serienfertigung von Bauteilen, insbesondere bei hohen Stückzahlen, dar. Selbst die Möglichkeit einer mehrstufigen Wuchtung durch dieses Verfahren ist ohne Einsatz von geschultem Personal möglich und birgt daher einen hohen Kostenvorteil im Herstellungsprozess gegenüber einer manuellen Wuchtung. Zudem ist durch die Automatisierung eine gleichbleibend hohe Güte der Wuchtung gewährleistet, die durch eine manuelle Wuchtung nur schwer zu erreichen ist.

Bei einer weiteren vorteilhaften Ausgestaltungsform werden als Stifte zylindergeformte Stifte und/oder eckig geformte Stifte und/oder Stifte verwendet, die eine Kombination aus verschiedenen Formen von Querschnittsflächen zur Wuchtung in den entsprechenden Öffnungen fixiert. Regelmäßig zylindergeformte Stifte zur Wuchtung von Bauteilen verwendet.

Vorteilhaft ist auch die Verwendung von Stiften weiterer Querschnittsformen. Eine Abweichung von der runden Querschnittsfläche kann beispielsweise eine höhere Stabilität des Bauteils sein. Die erhöhte Stabilität durch eine, beispielsweise eckige Form, ist beispielsweise einer höheren Formfestigkeit geschuldet. Dies gilt insbesondere dann, falls Öffnungen nicht durch die entsprechenden Stifte ausgefüllt werden. Hier ist es zudem denkbar, Zylindergeformte Stifte zur Gewichtsreduktion in Dreieckige oder quadratische Öffnungen zu positionieren.

Im Folgenden wird die Erfindung anhand der in den Figuren dargestellten Ausführungsbeispiele näher beschrieben und erläutert. Es zeigen:
- FIG 1: eine Draufsicht auf einen Ausschnitt eines Bauteils,
- FIG 2: eine vorteilhafte Form einer der Öffnung zur Aufnahme von Stiften unterschiedlicher Größe,
- FIG 3: eine weitere vorteilhafte Form der Öffnung zur Aufnahme von Stiften unterschiedlicher Größe,
- FIG 4: eine weitere vorteilhafte Form der Öffnung zur Aufnahme von Stiften unterschiedlicher Größe,
- FIG 5: eine perspektivische Ansicht von zylindergeformten Stiften vor der Fixierung in entsprechenden Öffnungen, sowie
- FIG 6: einen Querschnitt eines Bauteils nach der Wuchtung.

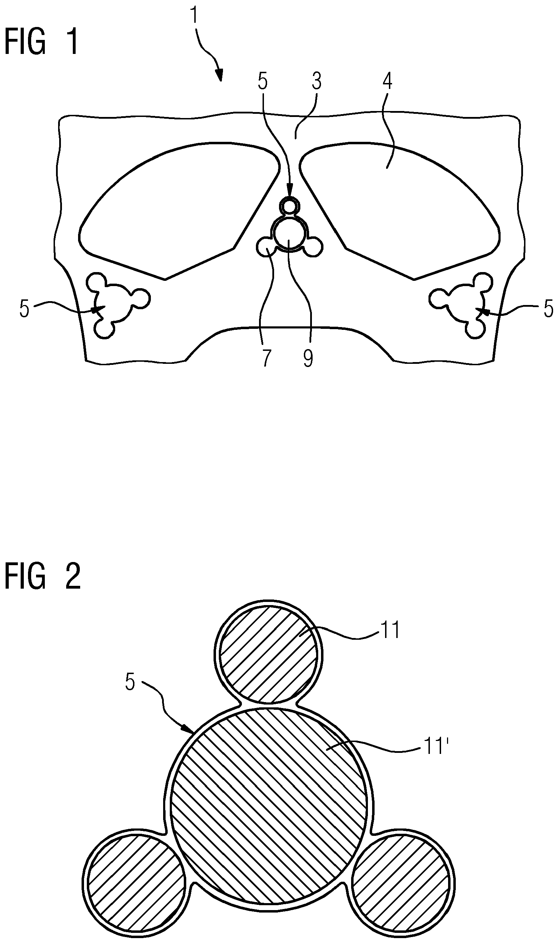

FIG 1 zeigt eine Draufsicht auf einen Ausschnitt eines Bauteils 1. Bei diesem Bauteil 1 handelt es sich um einen Ausschnitt eines Blechpakets 3 eines Rotors einer elektrischen Maschine. Das Blechpaket weist Aussparungen 4, beispielsweise zur Gewichtsreduktion, sowie Öffnungen 5, 7, 9 auf. Die Öffnungen 5 setzen sich, wie auch in FIG 2 nochmals verdeutlicht, aus kreisförmigen Öffnungen 7, 9 zusammen. Die kreisförmige Öffnungen 7, 9 dienen zur Aufnahme der entsprechenden zylindergeformten Stifte 11, 11'. Die gezeigte Anordnung, in der sich jeweils zwischen zwei Aussparungen 4 eine Öffnung 5 zur Aufnahme von zylindergeformten Stiften 11, 11' befindet, erweist sich als besonders platzsparend. So trägt die gezeigte Anordnung zur Reduktion des Gewichts, dem Trägheitsmodul und dem Platzbedarf des Blechpaketes 3 bei. Zur Wuchtung des Bauteils wird dieses in Rotation versetzt und die dabei entstehenden Deviationsmomente gemessen. Anschließend werden die Gewichte der Stifte 11, 11' für die einzelnen Öffnungen 7, 9 errechnet und die entsprechenden Stifte 11, 11' in den vorgesehenen Öffnungen 7, 9 fixiert.

FIG 2 zeigt einen Schnitt durch die Öffnung 5, die sich aus der kreisförmigen Öffnung 9 für die zylindergeformten Stifte einer großen Querschnittsfläche 11' und drei kreisförmige Öffnungen 7 für die zylindergeformten Stifte einer kleinen Querschnittsfläche 11 zusammensetzt. In diesen kreisförmigen Öffnungen 7,9 sind bereits zylindergeformte Stifte 11, 11' fixiert. Mittig angeordnet befindet sich ein Stift mit einer großen Querschnittsfläche 11' und darum angeordnet drei Stifte mit einer kleinen Querschnittsfläche 11. Dabei können sich die Stifte 11, 11' entweder berühren oder sich, wie hier dargestellt, in einem kleinen Abstand a voneinander befinden. Der Abstand a sollte dabei nicht zu groß gewählt werden, da die Öffnung 5 ansonsten zu viel Platz in dem Bauteil 1 beanspruchen würde. Der Rand der Öffnung 5 umfasst dabei alle vier zylindergeformten Stifte 11, 11'. Im Bereich zwischen jeweils zwei zylindergeformten Stifte 11, 11' umfasst der Rand der Öffnung 5 in einem konkaven Abschnitt die jeweiligen zylindergeformten Stifte 11, 11'. Dieser konkave Bereich der Öffnung 5 dient zum verbesserten Halt der zylindergeformten Stifte einer kleinen Querschnittsfläche 7. Der Abstand a ist zwar möglichst gering zu wählen - es ist jedoch zu beachten, dass eine ausreichende Formstabilität der Öffnung 5 gewährleistet ist. Dies gilt insbesondere, falls nicht in allen kreisförmigen Öffnungen 7, 9 zylindergeformte Stifte 11, 11' fixiert sind.

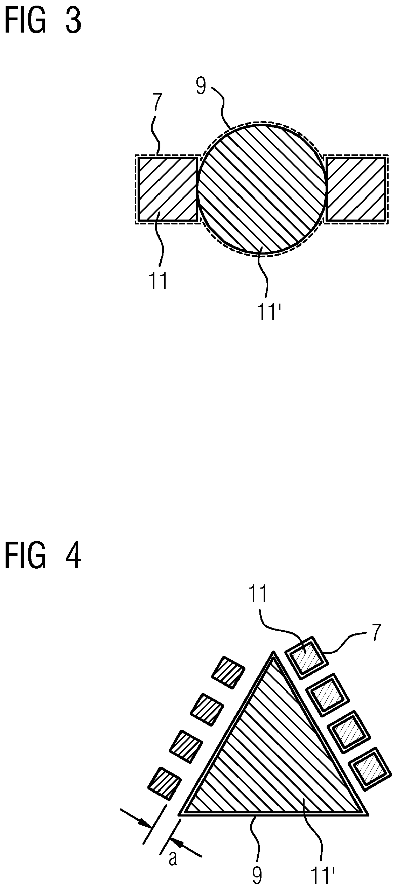

FIG 3 zeigt eine weitere vorteilhafte Form der Öffnung 5. A zeigt eine kreisförmige Öffnung 9 für einen zylindergeformten Stift mit einer großen Querschnittsfläche 11'. Daran anschließend befinden sich zwei quadratische Öffnungen 7, in denen jeweils ein Stift einer kleinen Querschnittsfläche fixiert ist. Falls in dieser konkreten Ausgestaltung nur die Stifte 11, 11' mit einer quadratischen Querschnittsfläche in der entsprechenden Öffnung 7, 9 fixiert werden, so ist es ratsam, eine Klebeverbindung oder eine Verbindung durch Kraftschluss zur Fixierung der Stifte zu wählen.

FIG 4 zeigt eine weitere vorteilhaft Form der Öffnung 5, wobei die mittig angeordnete Öffnung 9 für einen dreieckigen Stift einer großen Querschnittsfläche 11' vorgesehen ist und entlang von zwei Seiten quadratische Öffnungen 7 für Stifte einer kleinen Querschnittsfläche 11 im Abstand a angeordnet sind. Hierbei sind die Öffnungen 7, 9 nicht zusammenhängend. Dies gewährt eine erhöhte Stabilität und Unabhängigkeit der einzelnen Stifte 11, 11' in ihrer Befestigung. Nachteilig ist jedoch der erhöhte Platzbedarf, falls der Abstand a größer gewählt wird. Zur Fixierung der Stifte 11, 11' in den entsprechenden Öffnungen 7, 9 ist wiederum eine Klebeverbindung zweckmäßig.

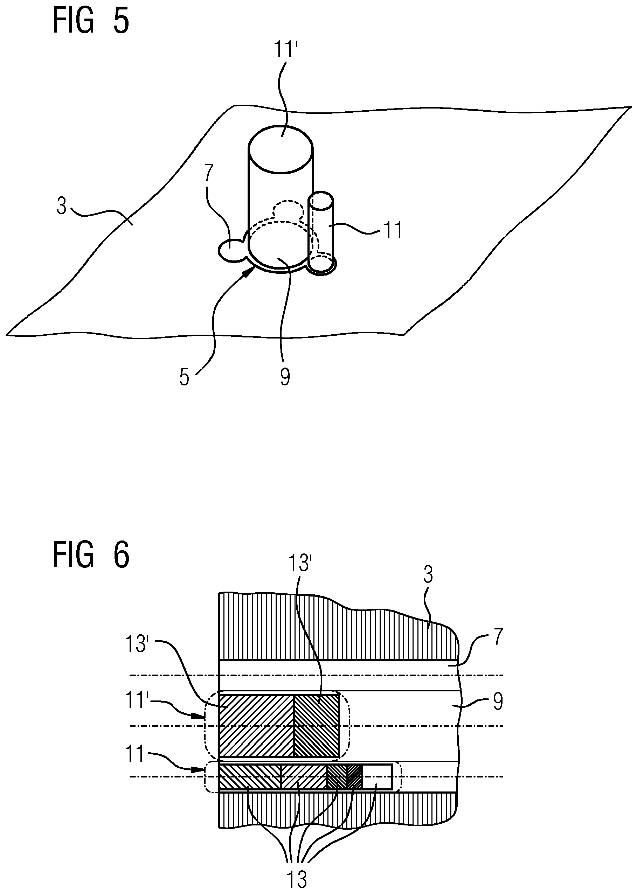

FIG 5 zeigt eine perspektivische Ansicht von zwei zylindergeformten Stifte 11, 11' vor der Fixierung in der entsprechenden Öffnung 7, 9. Es ist zu erkennen, dass die Stifte 11, 11' unterschiedliche Längen aufweisen. Darüber hinaus ist nicht jede der kreisförmigen Öffnungen 7, 9 mit einem entsprechenden Stift 11, 11' versehen. Dies ist insbesondere bei einem mehrstufigen Verfahren zur Wuchtung des Bauteils vorteilhaft, da noch zusätzliche zylindergeformte Stifte 11, 11' in den freien Öffnungen 5, 7 fixiert werden können. Nach dem Einfügen der Stifte 11, 11' in den entsprechenden Öffnungen 7, 9 können diese mittels einer Schraubverbindung, durch eine Klebeverbindung oder durch eine kraftschlüssige Verbindung in der entsprechenden kreisförmigen Öffnung 7, 9 fixiert werden.

FIG 6 zeigt einen Querschnitt durch das Bauteil 1. Hierbei ist die Projektion von drei Öffnungen 7, 9 sichtbar. In der Mitte befindet sich die Öffnung 9 einer großen Querschnittsfläche und jeweils an dessen Seite angeordnet, zwei Öffnungen mit einer kleinen Querschnittsfläche 7. In der Öffnung mit einer großen Querschnittsfläche 9 befinden sich zwei Elemente einer kleinen Querschnittsfläche 13', die zusammen den Stift 11' bilden. In der darunter gezeichneten Öffnung mit einer kleinen Querschnittsfläche 7 befinden sich fünf Elemente einer kleinen Querschnittsfläche 13. Auch diese bilden zusammen den Stift einer kleinen Querschnittsfläche 11. Die unterschiedliche Schraffierung der jeweiligen Elemente 13, 13' weist auf die Verwendung von unterschiedlichen Werkstoffen hin. Dabei kann der Einsatz von Elementen 13, 13' aus unterschiedlichen Werkstoffen, welche verschiedene Dichten aufweist, die Güte der Wuchtung entscheidend verbessern. In der oben befindlichen Öffnung mit einer kleinen Querschnittsfläche 7 wurde noch kein Stift 11 oder Element 13 fixiert. Die einzelnen Elemente 13, 13' können hier wiederum vorzugsweise mit einer Klebeverbindung in der entsprechenden Öffnung 7, 9 fixiert werden. Obgleich sich eine Verbindung durch Verklebung als besonders vorteilhaft erwiesen hat, ist diese nachfolgend schlecht lösbar. Daher ist, insbesondere bei einem mehrstufigen Wuchtungsverfahren zusätzliche Öffnungen 7, 9 für gegebenenfalls zusätzlichen Elemente 13, 13' oder Stifte 11, 11' von entscheidender Bedeutung. In dieser Figur sind gegebenenfalls vorhandene, weitere Öffnungen einer kleinen Querschnittsfläche 7, welche beispielsweise in FIG 2 gezeigt wird, durch die anderen Öffnungen (hier 9) verdeckt und zur besseren Übersicht nicht gezeichnet.

Zusammenfassend betrifft die Erfindung ein Verfahren zur Wuchtung eines Bauteils 1, insbesondere eines Rotors einer elektrischen Maschine, mittels Stiften 11, 11' welche in vorgefertigte Öffnungen 5, 7, 9 im Bauteil 1 eingebracht werden, wobei das Bauteil 1 dadurch ausgewuchtet wird, indem Stifte 11, 11' verschiedener Längen, Querschnittsflächen und Querschnittsformen in entsprechende Öffnungen 7, 9 im Bauteil 1 fixiert werden. Weiterhin können die Stifte 11, 11' aus mehreren Elementen 13, 13' zusammengesetzt sein und das Verfahren in einer oder mehreren Stufen zu einer schrittweise erfolgenden Erhöhung der Güte der Wuchtung eingesetzt werden. Durch dieses Verfahren kann die Unwucht des Bauteils 1 erheblich reduziert - und gleichzeitig Gewicht, Platzbedarf und Trägheitsmoment des Bauteils 1 eingespart werden. Zudem besteht die Möglichkeit das Verfahren zu automatisieren.

## Patentansprüche

1. Verfahren zur Wuchtung eines Bauteils (1), insbesondere eines Rotors einer elektrischen Maschine, mittels Stiften (11,11'), welche in vorgefertigte Öffnungen (5,7,9) im Bauteil (1) eingebracht werden, **dadurch gekennzeichnet, dass** das Bauteil (1) dadurch ausgewuchtet wird, dass Stifte mit einer unterschiedlichen Größe ihrer Querschnittsfläche (11,11') in entsprechende Öffnungen (7,9) im Bauteil (1) fixiert werden und dass in unmittelbarer Nähe einer kreisförmigen Öffnung einer ersten Querschnittsfläche (9) jeweils mindestens eine weitere Öffnung mit einer zweiten, gegenüber der ersten Querschnittsfläche kleineren Querschnittsfläche (7) angeordnet wird.

2. Verfahren nach Anspruch 1, wobei um die kreisförmige Öffnung der ersten Querschnittsfläche (9) jeweils drei kreisförmige weitere Öffnungen dergestalt angeordnet werden, dass die Ränder der Öffnungen (7) in unmittelbarer Nähe des Randes der ersten Querschnittsfläche befinden.

3. Verfahren nach einem der vorangehenden Ansprüche, wobei die Stifte (11,11') von unterschiedlicher Größe, unterschiedlichen Querschnittsformen und unterschiedlichen Querschnittsflächen aufweisend und/oder jeweils aus Werkstoffen unterschiedlicher Dichten, insbesondere aus Aluminium, Stahl, Zink, Wolfram, Blei, Harz oder Kunststoff gefertigt sind.

4. Verfahren nach einem der vorangehenden Ansprüche, wobei sich die Stifte (11,11') aus mehreren Elementen (13,13') zusammensetzen, welche in der entsprechenden Öffnung (7,9) fixiert werden.

5. Verfahren nach einem der vorangehenden Ansprüche, wobei die Stifte (11,11') nach einer Feststellung der Unwucht automatisiert in die dafür vorgesehenen Öffnungen (7,9) eingeführt werden, sowie dass bei einer nicht ausreichenden Wuchtungsgüte der Wuchtungsvorgang wiederholt wird.

6. Verfahren nach einem der vorangehenden Ansprüchen, wobei als Stifte (11,11') zylindergeformte Stifte (11,11') und/oder eckig geformte Stifte (11,11') und/oder mit einer Querschnittsfläche, welche aus Kombination aus verschiedenen Formen der Querschnittsflächen zur Wuchtung in den entsprechenden Öffnungen fixiert werden.

7. Bauteil (1) einer elektrischen Maschine, aufweisend Stifte (11,11') zur Wuchtung des Bauteils, **dadurch ge** - **kennzeichnet**, dass für die Stifte (11,11') entsprechende Öffnungen unterschiedlicher Größe ihrer Querschnittsflächen (7,9) vorgesehen sind, dass in unmittelbarer Nähe einer kreisförmigen Öffnung einer ersten Querschnittsfläche (9) jeweils mindestens eine weitere Öffnung mit einer zweiten, gegenüber der ersten Querschnittsfläche kleineren Querschnittsfläche (7) angeordnet ist, sowie dass die Stifte (11, 11') in den entsprechenden Öffnungen (7,9) fixiert sind.

8. Elektrisch rotierende Maschine, aufweisend ein Bauteil (1) gemäß Anspruch 7.

9. Vorrichtung zum Wuchten eines Bauteils (1), insbesondere eines Rotors einer elektrisch rotierenden Maschine, mittels eines Verfahrens der Ansprüche 1 bis 6, wobei die Vorrichtung nach Feststellung einer Unwucht zur Einführung von Stiften unterschiedlich großen Querschnittsflächen (11,11') in die dafür vorgesehenen Öffnungen (7,9) ausgebildet ist, und wobei in unmittelbarer Nähe einer kreisförmigen Öffnung einer ersten Querschnittsfläche (9) jeweils mindestens eine weitere Öffnung mit einer zweiten, gegenüber der ersten Querschnittsfläche kleineren Querschnittsfläche (7) angeordnet wird.

## Claims

1. Method for balancing a component (1), in particular a rotor of an electric machine, by means of pins (11, 11'), which are introduced into prefabricated openings (5, 7, 9) in the component (1), **characterised in that** the component (1) is balanced **in that** pins having cross-sectional areas (11, 11') of different sizes are fixed into corresponding openings (7, 9) in the component (1) and that at least one further opening having a second cross-sectional area (7), smaller compared with the first cross-sectional area, is in each case arranged in the immediate vicinity of a circular opening having a first cross-sectional area (9).

2. Method according to claim 1, wherein three circular further openings are arranged in each case in such a manner around the circular opening having the first cross-sectional area (9) that the edges of the openings (7) are situated in the immediate vicinity of the edge of the first cross-sectional area.

3. Method according to one of the preceding claims, wherein the pins (11, 11') have different sizes, different cross-sectional shapes and different cross-sectional areas and/or are in each case produced from materials having different densities, in particular from aluminium, steel, zinc, tungsten, lead, resin or plastic.

4. Method according to one of the preceding claims, wherein the pins (11, 11') are assembled from multiple elements (13, 13') which are fixed in the corresponding opening (7, 9).

5. Method according to one of the preceding claims, wherein after an imbalance has been determined the pins (11, 11') are introduced in automated fashion into the openings (7, 9) provided for the purpose and in the event of an inadequate quality of balancing, the balancing operation is repeated.

6. Method according to one of the preceding claims, wherein cylindrically shaped pins (11, 11') and/or angularly shaped pins (11, 11') and/or pins having a cross-sectional area formed from a combination of cross-sectional areas having different shapes are fixed in the corresponding openings as the pins (11, 11') for balancing.

7. Component (1) of an electric machine, having pins (11, 11') for balancing the component, **characterised in that** corresponding openings having different sizes of their cross-sectional areas (7, 9) are provided for the pins (11, 11'), that at least one further opening having a second cross-sectional area (7), smaller compared with the first cross-sectional area, is in each case arranged in the immediate vicinity of a circular opening having a first cross-sectional area (9), and that the pins (11, 11') are fixed in the corresponding openings (7, 9).

8. Electrically rotating machine, having a component (1) according to claim 7.

9. Device for balancing a component (1), in particular a rotor of an electrically rotating machine, by means of a method according to claims 1 to 6, wherein after an imbalance is determined the device is designed in order to introduce pins having different sizes of cross-sectional area (11, 11') into the openings (7, 9) provided for this purpose, and wherein at least one further opening having a second cross-sectional area (7), smaller compared with the first cross-sectional area, is in each case arranged in the immediate vicinity of a circular opening having a first cross-sectional area (9).

## Revendications

1. Procédé d'équilibrage d'une pièce (1), notamment d'un rotor d'une machine électrique, au moyen de broches (11, 11'), qui sont introduites dans des ouvertures (5, 7, 9) de la pièce (1) fabriquées à l'avance, **caractérisé en ce que** l'on équilibre la pièce (1) en immobilisant des broches, ayant une dimension différente de leur surface (11, 11') de section transversale, dans des ouvertures (7, 9) correspondantes de la pièce (1) et **en ce que** l'on met, à proximité immédiate d'une ouverture circulaire d'une première surface (9) de section transversale, respectivement, au moins une autre ouverture ayant une deuxième surface (7) de section transversale plus petite que la première surface de section transversale.

2. Procédé suivant la revendication 1, dans lequel on met, autour de l'ouverture circulaire de la première surface (9) de section transversale, respectivement, trois autres ouvertures circulaires, de manière à ce que les bords des ouvertures (7) se trouvent à proximité immédiate du bord de la première surface de section transversale.

3. Procédé suivant l'une des revendications précédentes, dans lequel les broches (11, 11') de dimensions différentes ont des formes de section transversale différentes et des surfaces de section transversale différentes et/ou sont en matériaux de densité différente, notamment en aluminium, acier, zinc, tungstène, plomb, résine ou matière plastique.

4. Procédé suivant l'une des revendications précédentes, dans lequel on compose les broches (11, 11") de plusieurs éléments (13, 13'), qui sont immobilisés dans l'ouverture (7, 9) correspondante.

5. Procédé suivant l'une des revendications précédentes, dans lequel on introduit les broches (11, 11") après une constatation du balourd, de manière automatisée dans les ouvertures (7, 9) prévues à cet effet, ainsi que l'on répète l'opération d'équilibrage si la qualité de l'équilibrage n'est pas suffisante.

6. Procédé suivant l'une des revendications précédentes, dans lequel on immobilise, dans les ouvertures correspondantes, pour l'équilibrage, comme broches (11, 11'), des broches (11, 11') conformées en cylindre et/ou des broches (11, 11') conformées polygonalement et/ou ayant une surface de section transversale, qui provient d'une combinaison de formes différentes des surfaces de section transversale.

7. Pièce (1) d'une machine électrique ayant des broches (11, 11') d'équilibrage de la pièce, **caractérisée en ce qu'**il est prévu, pour les broches (11, 11'), des ouvertures correspondantes de dimensions différentes de leur surface (7, 9) de section transversale, **en ce qu'**à proximité immédiate d'une ouverture circulaire d'une première surface (9) de section transversale, est prévue, respectivement, au moins une autre ouverture ayant une deuxième surface (7) de section transversale plus petite que la première surface de section transversale, ainsi qu'en ce que les broches (11, 11') sont immobilisées dans les ouvertures (7, 9) correspondantes.

8. Machine tournant électriquement, comportant une pièce (1) suivant la revendication 7.

9. Système d'équilibrage d'une pièce (1), notamment un rotor d'une machine tournant électriquement au moyen d'un procédé suivant les revendications 1 à 6, le système étant constitué pour, après constatation d'un balourd, introduire des broches de surface (11, 11') de section transversale de dimensions différentes dans les ouvertures (7, 9) prévues à cet effet, et dans lequel, à proximité immédiate d'une ouverture circulaire d'une première surface (9) de section transversale, est prévue, respectivement, au moins une autre ouverture d'une deuxième surface (7) de section transversale plus petite que la première surface de section transversale.
